(19) Europäisches Patentamt
European Patent Office
Office européen des brevets

(11) **EP 4 614 180 A1**

(12) **EUROPEAN PATENT APPLICATION**

(43) Date of publication:
**10.09.2025  Bulletin 2025/37**

(21) Application number: **24161190.4**

(22) Date of filing: **04.03.2024**

(51) International Patent Classification (IPC):
**G01S 5/02** $^{(2010.01)}$     **G01S 5/12** $^{(2006.01)}$

(52) Cooperative Patent Classification (CPC):
**G01S 5/0289; G01S 5/0247; G01S 5/0278;
G01S 5/12;** G01S 5/0244

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **u-blox AG
8800 Thalwil (CH)**

(72) Inventors:
• **Bartlett, David
8800 Thalwil (CH)**
• **Karlsson, Peter
8800 Thalwil (CH)**
• **Lenzarini, Davide
8800 Thalwil (CH)**
• **Kappi, Jani
8800 Thalwil (CH)**

(74) Representative: **Epping - Hermann - Fischer
Patentanwaltsgesellschaft mbH
Schloßschmidstraße 5
80639 München (DE)**

(54) **METHOD FOR DETERMINING ORIENTATIONS AND POSITIONS OF A PLURALITY OF ELECTRONIC DEVICES**

(57)     A method for determining orientations and positions of a plurality of electronic devices is applied for at least 3 or 4 electronic devices in an area, and comprises that each electronic device obtains angle measurements, ranging measurements and positioning measurements of the electronic device; one of the at least 3 or 4 electronic devices and/or a server collects the angle measurements, the ranging measurements and the positioning measurements of each electronic device and determines an orientation and a position of each electronic device based on the collected measurements by performing a global computation.

## Fig 2

**Description**

TECHNICAL FIELD

This disclosure relates to a method for determining orientations and positions of a plurality of electronic devices. The disclosure further relates to an electronic device, a server and a system.

BACKGROUND ART

In many applications like indoor positioning systems, a plurality of electronic devices are typically needed to be distributed and deployed in a concerned area for a positioning system. Such electronic devices are usually regarded as anchor nodes or anchor devices. Before locating devices moving in the area, the positioning system usually needs to be aware of the positions of the anchor nodes. Positions of moving devices can be estimated based on the relative positions with respect to the anchor nodes. The accuracy of locating moving devices in the positioning system can be significantly improved if the positioning system has both accurate orientations of the anchor nodes and accurate positions of the anchor nodes.

However, obtaining accurate orientations and positions of the anchor nodes may require plenty of efforts. For example, global navigation satellite system, GNSS, measurements may not provide sufficient accuracy in indoor environments. In conventional ways, when the anchor nodes are distributed, the orientations and the positions of the anchor nodes may be obtained manually, or through time-consuming estimation. If some of or all the anchor nodes are re-distributed, the orientations and the positions of the anchor nodes cannot be obtained accurately in a short time. It is desired to obtain accurate orientations and accurate positions of the anchor nodes in a fast and efficient way.

SUMMARY OF INVENTION

An object to be achieved is to provide an improved concept for fast and accurately determining orientations and positions of a plurality of electronic devices.

This object is achieved with the subject-matter of the independent claims. Embodiments and developments derive from the dependent claims.

According to the present disclosure, a set of electronic devices are deployed in an area, particularly in an indoor area. The electronic devices may be used to locate movable devices in the area. Accurate orientations and accurate positions of the electronic devices are unknown.

The improved concept is based on the idea that the orientations and the positions of the electronic devices are determined in a collaborative approach. To be specific, each electronic device obtains a few measurements, including ranging measurements and angle measurements with respect to its neighboring electronic devices based on a wireless technology, and positioning measurements related to absolute positions, e.g., from GNSS. All the measurements are collected and input to a global computation and the global computation outputs the orientations and the positions of all the electronic devices.

By means of the improved concept, the measurements between the electronic devices are obtained, and a global computation is performed by using all measurements from all the electronic devices in order to collaboratively solve positions and orientations for the set of the electronic devices. By using the collaborative approach, both the orientations and the positions can be determined accurately and fast.

According to the present disclosure, the method for determining orientations and positions of a plurality of electronic devices is applied for at least N electronic devices in an area, wherein N is an integer, and when the at least N electronic devices are on a 2-dimensional plane, N is 3, else, that is when the at least N electronic devices are not on a 2-dimensional plane, N is 4. The method comprises that each electronic device obtains angle measurements of the electronic device with respect to M neighboring electronic devices in the at least N electronic devices based on a wireless technology, wherein M is an integer, and when N is 3, M is at least 1, and when N is 4, M is at least 2, ranging measurements of the electronic device with respect to at least part of the other electronic devices based on the wireless technology, and positioning measurements of the electronic device related to an absolute position of the electronic device; one of the at least N electronic devices and/or a server collects the angle measurements, the ranging measurements, and the positioning measurements of each electronic device; and the one of the at least N electronic devices and/or the server determines an orientation and a position of each electronic device based on the collected angle measurements, the collected ranging measurements and the collected positioning measurements by performing a global computation.

In an example implementation of the method, when N is 3 and the at least N electronic devices are all disposed with a same orientation with respect to the 2-dimensional plane, M is 1.

In an example implementation of the method, determining the orientation and the position of each electronic device by performing a global computation comprises computing the position of each electronic device using the positioning measurements and at least one of: the angle measurements of the electronic device and the ranging measurements of the electronic device; and computing the orientation of each electronic device using the angle measurements of the electronic device, the position of the electronic device, and the positions of the M neighboring electronic devices. In this way, all the collected measurements are used in a collaborative approach to determine the orientations and the positions of all the electronic devices.

In such an implementation, determining the orientation and the position of each electronic device by performing a global computation further comprises refining the position of each electronic device using at least one of: the positioning measurements, the ranging measurements and the orientations; refining the orientation of each electronic device using the angle measurements of the electronic device and the refined positions; and repeating the refining of the positions and the refining of the orientations until a target accuracy level of the orientations and the positions is obtained. The refining is performed using all the collected measurements in a collaborative approach, and further improves the accuracy of the determined orientations and the determined positions of all the electronic devices.

In a further implementation of the method, determining the orientation and the position of each electronic device by performing a global computation further comprises performing an optimization by the server, wherein the collected angle measurements, the collected ranging measurements and the collected positioning measurements are inputs of the optimization, and the respective orientations and the respective positions of the at least N electronic devices are outputs of the optimization. In this implementation, the global optimization is performed by using all the collected measurements. The determined orientations and the determined positions of all the electronic devices are an optimal output from the global optimization and thus have improved accuracy.

In such an implementation, performing the optimization comprises determining an optimization problem with an objective of minimizing errors of the orientations and the positions, feeding the inputs in the optimization problem, and outputting the orientations and the positions by finding a solution of the optimization problem. With the objective of the optimization problem, the determined orientations and the determined positions are an optimal solution that minimizes errors, and thus have improved accuracy.

In some implementations of the method, the positioning measurements of each electronic device comprise at least one of: raw GNSS measurements of the electronic device; and a preset coarse position of the electronic device. These positioning measurements are related to absolute positions of the electronic devices but with lower accuracy. The positioning measurements are used in the collaborative approach with the other measurements obtained from the wireless technology, so that accurate orientations and accurate positions can be determined.

In some implementations of the method, the wireless technology is one of: wireless local area network, WLAN, technology based on IEEE 802.11 family of standards, Bluetooth technology, or Ultra-wideband, UWB, technology. The ranging measurements and the angle measurements between the electronic devices can be obtained by using the wireless technology, and further used in the collaborative approach with the positioning measurements related to absolute positions, so that accurate orientations and accurate positions can be determined.

In some implementations of the method, the ranging measurements of each electronic device are obtained based on timing measurements using the wireless technology. In this way, the obtained ranging measurements are more accurate, and thus the accuracy of the determined orientations and the determined positions is further improved.

In some implementations of the method, determining the orientation and the position of each electronic device further comprises determining an azimuth angle, an elevation angle and a rotation angle of the electronic device, wherein when N is 3 and the at least N electronic devices are all disposed with the same orientation with respect to the 2-dimensional plane, determining one of the azimuth angle, the elevation angle and the rotation angle of the electronic device; and determining a 2-dimensional coordinate in a defined 2-dimensional coordinate system when N is 3, and determining a 3-dimensional coordinate in a defined 3-dimensional coordinate system when N is 4. The electronic device may comprise a linear antenna array, and the orientation of the electronic device corresponds to the orientation of the antenna array. The determined orientations and the determined positions can be further used to accurately locate movable devices in the area.

In some implementations of the method, determining the orientation and the position of each electronic device comprises using at least one of: error distributions, confidence levels and quality indicators with respect to the angle measurements, the ranging measurements, or the positioning measurements. Given such additional information, the measurements can be used in a more effective way, for example, by using the measurements selectively or with different weights, so that more reliable measurements are used for determining the orientations and the positions. The accuracy of the determined orientations and the determined positions is further improved.

In some implementations, the method further comprises collecting additional measurements from an accelerometer and/or a magnetometer and/or an inclinometer in at least one of the at least N electronic devices, and using the additional measurements in the determining the orientation and the position of each electronic device. Given such additional measurements, the accuracy of the determined orientations and the determined positions is further improved. Moreover, the computation time can be reduced, for instance by reducing the number of iterations required to converge towards a desired accuracy target.

In some implementations of the method, collecting the angle measurements, the ranging measurements and the positioning measurements of each electronic device further comprises collecting over a secured channel and authenticating at least the collected ranging measurements. In this way, the measurements used for determining the orientations and the positions can be ensured to be authentic and are more reliable, the accuracy of the determined orientations and the determined positions can be further improved.

The present disclosure further provides an electronic device according to the improved concept. The electronic device may be configured to perform the respective actions by any one of the N electronic devices in the various implementations described above of the method.

Further implementations of the electronic device become readily apparent from the various implementations described above in conjunction with the method.

The present disclosure further provides a server according to the improved concept. The server may be configured to perform the respective actions by the server in the various implementations described above of the method.

Further implementations of the server become readily apparent from the various implementations described above in conjunction with the method.

A system according to the improved concept may comprise at least N electronic devices configured according to one of the above implementations and at least a server configured according to one of the above implementations. For example, when the at least N electronic devices are on a 2-dimensional plane, N is 3, else, N is 4.

Further implementations and developments of the system become readily apparent for the skilled reader from the various implementations described above in conjunction with the method.

According to one embodiment of the improved concept, a computer program product comprises instructions that may be stored in a preferably non-transitory computer-readable storage medium, the instructions enabling a computer system with one or more processors to execute a method according to one of the implementations described above. The computer system may be implemented within an electronic device and/or a server and may be distributed.

Furthermore, a computer system may have one or more processors and a storage medium having computer program instructions stored therein, enabling the one or more processors to execute a method according to one of the implementations described above.

BRIEF DESCRIPTION OF DRAWINGS

The improved concept will be explained in more detail in the following with the aid of the drawings. Elements and functional blocks having the same or similar function bear the same reference numerals throughout the drawings. Hence their description is not necessarily repeated in the following drawings.

In the drawings:

Figure 1a, 1b    show example deployments of electronic devices;

Figure 2    shows a flowchart of a method for determining orientations and positions of a plurality of electronic devices;

Figure 3    shows an example of an orientation of an electronic device;

Figure 4    shows an example of computing an orientation of an electronic device;

Figure 5    shows a flowchart of an example implementation of a method for determining orientations and positions of a plurality of electronic devices;

Figure 6    shows a flowchart of a further example implementation of a method for determining orientations and positions of a plurality of electronic devices; and

Figure 7    shows an example implementation of an electronic device.

DETAILED DESCRIPTION

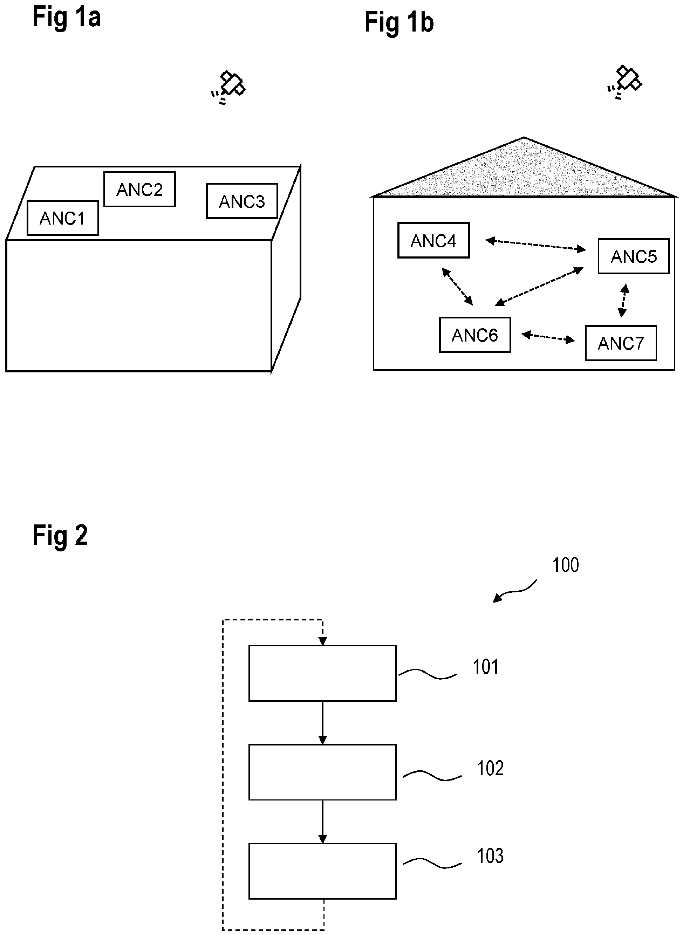

Figure 1a and 1b show two example deployments of electronic devices. In Figure 1a, three electronic devices ANC1 to ANC3 are deployed in distributed locations in an indoor area, where all ANC1 to ANC3 are disposed on a same 2-dimensional plane. For example, the three electronic devices are disposed indoor on the roof of an office, or on the roof of a floor in a building. Orientations of the three electronic devices with respect to the 2-dimensional plane may be arbitrary. After the three electronic devices are disposed, their accurate orientations and positions are unknown. In some implementations, the three electronic devices may be disposed with a same orientation with respect to the 2-dimensional plane. In such case, it is possible that partial orientations of the three electronic devices are same with respect to the 2-dimensional plane and may be known. For example, their azimuth and elevation angles with respect to the 2-dimensional plane are the same and known, e.g. they are all horizontally disposed on the roof and only the rotation angle may be unknown. In Figure 1b, four electronic devices ANC4 to ANC7 are deployed in distributed locations in an indoor area. All or part of the electronic devices are not disposed on a 2-dimensional plane.

In Figures 1a and 1b, the electronic devices may be regarded as anchor nodes or anchor devices to be used to locate movable devices in the area. The indoor area may be a warehouse, a factory, offices, and so on. When the electronic devices are deployed, they are fixed at the distributed locations. Occasionally, some or all of them may be moved to be fixed at new locations. When they are deployed or fixed at new locations, accurate orientations and accurate positions of them are unknown.

In Figures 1a and 1b, the electronic devices may be any kind of devices that have processing and wireless connection capability. The electronic devices may be powered by battery and/or power supply. The electronic devices may have GNSS receivers. However, in the indoor area, the reception of GNSS signals may be poor. The electronic devices can send and receive wireless signals by using a wireless technology, such as WLAN technology based on IEEE 802.11 family of standards, Bluetooth technology, or UWB technology. The electronic devices are neighboring device(s) of another electronic device in the sense that an electronic device is able to communicate with its neighboring device using the wireless technology. The electronic devices can send and receive the wireless signals with their respective neighboring devices. For example, each of electronic devices ANC4 to ANC7 in Figure 1b has at least two neighboring devices, where the neighborhood relationships are shown using dotted lines. ANC4 has two neighboring devices ANC5 and ANC6, ANC5 has three neighboring devices ANC4, ANC6 and ANC7, etc. Each electronic device and its at least two neighboring devices are preferably non-colinear. Similarly, in Figure 1a, the electronic devices have at least one neighboring device, where dotted lines for the neighborhood relationships are not shown in Figure 1a. Each electronic device and its neighboring device(s) are preferably non-colinear. When the electronic devices are disposed with the same orientation with respect to the 2-dimensional plane, each electronic device may only have one neighboring device.

Figure 2 shows a flowchart of a method 100. Method 100 may be applied for any one of the set 1a of the electronic devices in Figure 1a and the set 1b of the electronic devices in Figure 1b. In method 100, the electronic devices in set 1a or set 1b collaborate with each other so that the positions and orientations of the electronic devices are determined. As further example implementations, method 100 can be applied for different deployment of the electronic devices from the deployment in Figure 1a and the deployment in Figure 1b, where additional electronic device(s) may be deployed in respective deployments. Any additional device for the deployment in Figure 1b may be co-planar or not co-planar with the other electronic devices, or it does not need to have at least two neighboring devices or does not need to be non-colinear among with its neighboring devices. In such case, accurate orientations and positions of at least the electronic devices in set 1a and set 1b in the respective deployments can be determined.

When method 100 is applied for set 1b of the electronic devices in Figure 1b, in step 101, each electronic device of ANC4 to ANC7 obtains three types of measurements.

A first type of measurements are angle measurements of the electronic device with respect to at least two neighboring devices based on the wireless technology described above. As an example, the angle measurements may be angle of arrival, AoA, measurements when the electronic device receives wireless signals from the two neighboring devices using the wireless technology. As another example, the angle measurements may be angle of departure, AoD, measurements when the electronic device transmits wireless signals to the two neighboring devices using the wireless technology. When an electronic device has more than two neighboring devices, for example, ANC5 or ANC6 in Figure 1b, the electronic device may obtain the angle measurements from any two of its neighboring devices, or from further or all neighboring devices.

A second type of measurements are ranging measurements of the electronic device with respect to at least part of the other electronic devices, i.e., its neighboring devices based on the wireless technology. The at least part of its neighboring devices can be the at least two neighboring devices from which angle measurements are obtained, or can include further neighboring device(s). As an example, the ranging measurements may be estimations of distances between the electronic device with its neighboring devices based on received signal strength. As a further example, the ranging measurements may be estimations of distances between the electronic device with its neighboring devices based on timing measurements using the wireless technology. In such example, ranging measurement using the wireless technology may allow the electronic devices to measure transmission time of wireless signals between the electronic devices, and to estimate the distances based on the transmission time of wireless signals, for example, based on time of arrival, TOA, time difference of arrival, TDOA, and/or time of departure, ToD. Time synchronization, e.g., estimating clock offsets between electronic devices, may be further performed among the electronic devices to better measure the transmission time. The electronic device may obtain the ranging measurements from one of its neighboring devices, some of its neighboring devices, or from all its neighboring devices.

The angle measurements and the ranging measurements can be considered as relative positioning information among the electronic devices, as these measurements reflect their relative positions with respect to each other. Relatedly, the third type of measurements described in the following reflect absolute positioning information with respect to a defined coordinate system (to be described in the following). Combining the relative positioning information and the absolute positioning information, the global computation performed in step 103 computes the orientations and the positions in a collaborative and iterative way until the computed orientations and the computed positions converge to a target level of accuracy. Therefore, the amount of the angle measurements and the amount of the ranging measurements from individual electronic devices can be different with each other, as long as the total amount of the relative positioning information for all the electronic devices is sufficient for the global computation to converge. As an example, when there are four electronic devices and their positions and orientations are unknown, the global computation may need in total six ranging measurements among the four electronic devices and eight angle measurements among the four electronic devices. If one of the dimensions (to be described in the following) of the orientations is known, a similar amount of relative information is needed for the global computation. The ranging measurements and angle measurements are preferably obtained from overlapped sources, i.e., the six ranging measurements and six of the eight angle measurements are preferably obtained from same electronic devices. In further possible scenarios, e.g., when part of the dimensions in the positions or further dimensions in the orientations are known, less ranging measurements and less angle measurements need to be obtained for the global computation to converge.

A third type of measurements are positioning measurements of the electronic device. The positioning measurements are related to an absolute position of the electronic device in a defined coordinate system. The defined coordination system is further used for representing the determined positions in the following method steps. Coarse positions of the electronic devices, which reflect the absolute positions but of low accuracy, may be obtained from the positioning measurements. As an example, when the electronic devices have GNSS receivers, the positioning measurements may include raw GNSS measurements, such as GNSS doppler measurements, GNSS codephase measurements, GNSS carrier-phase measurements, etc. From the raw GNSS measurements, like for instance from the GNSS doppler measurements, coarse positions of the electronic devices in the GNSS global system may be obtained. As another example, the positioning measurements may include coarse positions of the electronic devices in a defined coordinated system, and may be preset when deploying the electronic devices. For example, coarse positions of the electronic devices in the area in Figure 1b may be preset with respect to a local coordinate system defined for the area. As another example, the positioning measurements may include coarse positions of the electronic devices estimated from wireless systems where the electronic devices are located. For example, coarse positions may be estimated from cell identifiers of mobile stations or identifiers of wireless access points.

In some implementations, an electronic device of ANC4 to ANC7 may further have an accelerometer and/or a magnetometer and/or an inclinometer. In such implementations, in step 101, the electronic device may further obtain additional measurements from the accelerometer and/or the magnetometer and/or the inclinometer. For example, the additional measurements may provide additional information of the orientation of the electronic device with respect to gravity, to the north direction, etc.

In some implementations, historical measurements obtained at different time intervals may be used in method 100, e.g., the measurements obtained at step 101 may further include the historical measurements collected at previous time intervals, so that the historical measurements are iteratively used in the subsequent global computation. In such implementations, method 100 further comprises a step (not shown in Figure 2) of storing collected measurements at time intervals as historical measurements.

Furthermore, when historical measurements are available, the measurements obtained at step 101 may only contain historical measurements, or contain both historical measurements and newly obtained measurements. In such implementations, the accuracy of the determined orientations and positions can be improved in an iterative way that measurements at different time intervals are used to improve the determined orientations and positions.

When method 100 is applied for set 1a of the electronic devices in Figure 1a, implementations in step 101 can be apparently derived from the various implementations described above in conjunction with method 100 applied for set 1b of the electronic devices in Figure 1b. Therefore, only possible differences are described in the following.

For angle measurements, each electronic device of ANC1 to ANC3 obtains angle measurements of the electronic device with respect to one or two neighboring devices based on the wireless technology. When ANC1 to ANC3 are all disposed with a same orientation with respect to the 2-dimensional plane on which ANC1 to ANC3 are disposed, each electronic device may obtain angle measurements with respect to only one neighboring device, which can be any one of its neighboring device(s); otherwise, each electronic device may obtain angle measurements with respect to two neighboring devices. Further angle measurements from further neighboring devices may be also obtained and used in method 100.

For ranging measurements, each electronic device of ANC1 to ANC3 obtains at least part of its neighboring devices based on the short-range wireless technology. The at least part of its neighboring devices can be the at least one or the at least two neighboring devices from which angle measurements are obtained depending on whether ANC1 to ANC3 are all disposed with a same orientation with respect to the 2-dimensional plane.

Similar as in the scenario in Figure 1b, the amount of the angle measurements and the amount of the ranging measurements from individual electronic devices can be different with each other, as long as the total amount of the relative positioning information for all the electronic devices is sufficient for the global computation to converge. As an example, when there are three electronic devices and their positions and orientations are unknown, the global computation may need in total three ranging measurements among the three electronic devices and six angle measurements among the three electronic devices. If one of the dimensions of the orientations is known, similar amount of relative information is needed for the global computation. The ranging measurements and angle measurements are preferable obtained from overlapped sources. In further possible scenarios, e.g., when part of the dimensions in the positions or further dimensions in the orientations are known, less ranging measurements and less angle measurements need to be obtained for the global computation to converge. For example, when the three electronic devices are disposed with a same known orientation with respect to the 2-dimensional plane, only one dimension of the orientation is unknown and to be determined in the global computation, the global computation may need in total three ranging measurements and three angle measurements, or in total one ranging measurements and five angle measurements.

When method 100 is applied for set 1b of the electronic devices in Figure 1b, in step 102, all the measurements obtained by all the electronic devices in step 101 are collected. The measurements include the three types of measurements described above. In some implementations, when additional measurements from accelerometers and/or magnetometers and/or inclinometers are available and obtained in some of the electronic devices in step 101, the additional measurements are also collected. In some implementations, when historical measurements at previous time intervals are available, the historical measurements are also collected or partially collected.

As an example, one of the electronic devices ANC4 to ANC7 may be a collector to collect all the measurements. The measurements may be collected by the collector via wireless and/or wired communications. As another example, a server which is not one of the electronic devices may collect all the measurements via wireless and/or wired communications. The involved communications are performed over a secured channel, for example, by using keys to protect the confidentiality and the integrity of the data exchanged. All or part of the collected measurements, for example, at least the collected ranging measurements, are authenticated to ensure the authenticity of the collected measurements.

When method 100 is applied for set 1a of the electronic devices in Figure 1a, implementations in step 102 can be apparently derived from the various implementations described above in conjunction with method 100 applied for set 1b of the electronic devices in Figure 1b.

When method 100 is applied for set 1b of the electronic devices in Figure 1b, in step 103, an orientation and a position of each electronic device are determined based on all the three types of measurements collected in step 102 by performing a global computation. If the collector, i.e., one of the electronic devices ANC4 to ANC7, collects the measurements, the collector performs the determination of orientations and positions of all the electronic devices based on the collected measurements. If the server collects the measurements, the server performs the determination.

The global computation takes all the measurements, e.g., also including additional measurements and historical measurements, of all the electronic devices into computation and determines the orientations and the positions in a collaborative approach. A type of measurements is not exclusively used to compute only the orientations or only the positions, but is used to compute both. The computed orientations and the computed positions are also used to improve the accuracy of each other in an iterative way.

In some implementations, when the additional measurements from accelerometers and/or magnetometers and/or inclinometers are also collected in step 102, the additional measurements are used in the global computation in a collaborative approach with the three types of measurements to further improve the accuracy of both the orientations and the positions and/or to reduce the global computation time, for instance by reducing the number of iterations required to reach the desired accuracy target.

In some implementations, some reliability related parameters, such as error distributions, confidence levels and quality indicators, may be associated with some of the measurements, e.g., the angle measurements, the ranging measurements, the positioning measurements, or the additional measurements if available. Such parameters reflect the reliability of the associated measurements. In the global computation, these parameters may be used to select more reliable measurements to be used in the computation, or to put different weights to the measurements to be used in the computation.

The determined position of each electronic device in step 103 is represented by a 3-dimensional coordinate in a defined 3-dimensional coordinate system. For example, a defined 3-dimensional coordinate system may be the earth-centered, earth-fixed, ECEF, coordinate system, the Universal Transverse Mercator, UTM, coordinate system, or a local 3-dimensional coordinate system aligned with an indoor area deployed with the electronic devices. When a local coordinate system is used for representing the positions of the electronic devices, coarse positions obtained from the GNSS raw measurements can be transformed into the local coordinate system. In step 103, the determination of the position of each electronic device corresponds to a determination of the 3-dimensional coordinate of each electronic device in the defined 3-dimensional coordinate system.

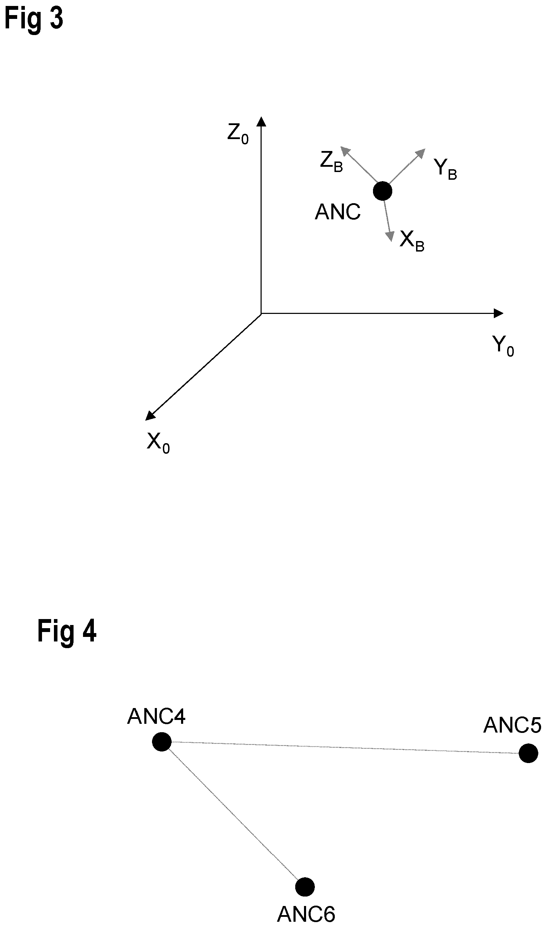

The determined orientation of each electronic device in step 103 is represented by 3-dimensional angles, for example, an azimuth angle $\phi$, an elevation angle $\theta$ and a rotation angle $\Psi$ of the electronic device. Figure 3 shows an example of an orientation of an electronic device. In the example, a system coordinate frame is shown by x-axis Xo, y-axis Yo and z-axis $Z_0$, and a body coordinate frame of an electronic device ANC is shown by x-axis $X_B$, y-axis $Y_B$ and z-axis $Z_B$. The system coordinate frame can be the defined 3-dimensional coordinate system described above in which the determined positions of the electronic devices are represented. The body coordinate frame of an electronic device is an individual coordinate system seen by the electronic device itself. The orientation of the electronic device is an orientation of the body coordinate frame with respect to the system coordinate frame. The electronic device may comprise a linear antenna array, and the body coordinate frame of the electronic device may be aligned with the antenna array, so that the orientation of the electronic device corresponds to the orientation of the antenna array. The orientation can be represented by 3-dimensional angles with which the body coordinate frame can rotate to align with the system coordinate frame. The 3-dimensional angles may be an azimuth angle $\phi$, an elevation angle $\theta$ and a rotation angle $\Psi$. As another example, the 3-dimensional angles may be yaw, pitch and roll angles.

The determination of the orientation of each electronic device in step 103 thus corresponds to a determination of the 3-dimensional angles with which the body coordinate frame can rotate to align with the system coordinate frame. In case when partial of the orientation is known, e.g., part of the 3-dimensional angles are known, the determination of the orientation comprises the determination of only the unknown angle(s) in the orientation.

Referring back to Figure 2, as an example, the determined orientation and the determined position of each electronic device can be formed in a 6-element tuple, wherein 3 elements in the tuple correspond to the 3 dimensions of the orientation and the other 3 elements in the tuple correspond to the 3 dimensions of the position.

When method 100 is applied for set 1a of the electronic devices in Figure 1a, implementations in step 103 can be apparently derived from the various implementations described above in conjunction with method 100 applied for set 1b of the electronic devices in Figure 1b. Therefore, only possible differences are described in the following.

The defined 3-dimensional coordinate system can be reduced to a defined 2-dimensional coordinate system corresponding to the 2-dimensional plane on which the electronic devices are disposed. The determined positions of the electronic devices can be thus represented in the defined 2-dimensional coordinate system. The determination of the position of each electronic device thus corresponds to a determination of a 2-dimensional coordinate of each electronic device in the defined 2-dimensional coordinate system.

The orientation of each electronic device in set 1a can be represented in the same way as for set 1b, which is represented by 3-dimensional angles with which the body coordinate frame can rotate to align with the system coordinate frame (even though the system coordinate frame is reduced to a 2-dimensional coordinate system). The determination of the orientation of each electronic device thus corresponds to a determination of the 3-dimensional angles with which the body coordinate frame can rotate to align with the system coordinate frame. In case when partial of the orientation is known, the determination of the orientation comprises the determination of only the unknown angle(s) in the orientation. For example, when all the electronic devices are disposed with a same orientation with respect to the 2-dimensional plane, and the azimuth and elevation angles with respect to the 2-dimensional plane are the same and known, the determination of the orientation comprises the determination of only the rotation angle.

The determined orientation of each electronic device can be represented by two angles, and can be any two angles in a 3-dimensional orientation. For example, an azimuth angle $\phi$ and a rotation angle $\Psi$, or a yaw angle and a roll angle. When two of the angles of electronic devices ANC1 to ANC3 with respect to the 2-dimensional plane are the same and known, only one angle, e.g., azimuth angle $\phi$ or rotation angle $\Psi$ or elevation angle $\theta$, of each electronic device needs to be determined for determining the complete orientation of each electronic device.

Method 100 may further comprise a step (not shown in Figure 2) of providing the determined orientations and the determined positions of the electronic devices to a database for any further access.

Method 100 can be performed continuously, such that the method starts over with step 101 by obtaining further measurements.

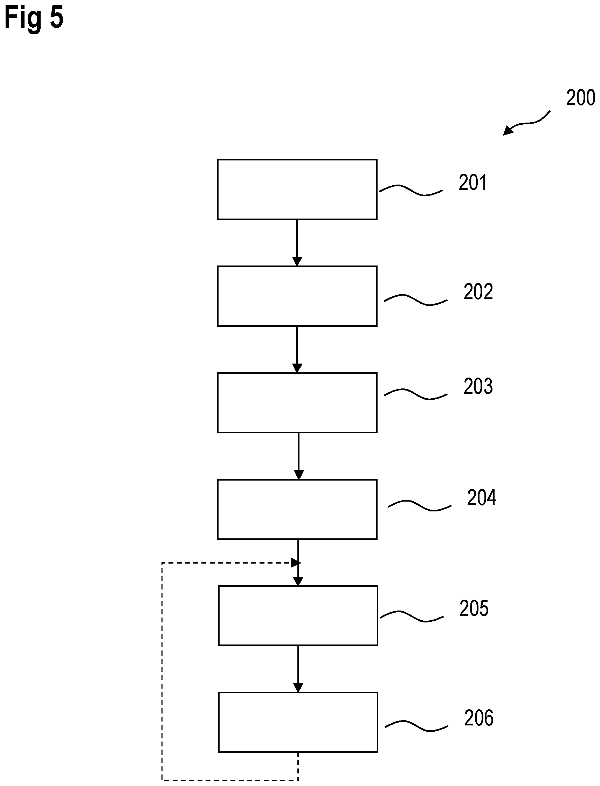

Figure 5 shows a flowchart of an example implementation of a method 200. Method 200 may be applied for any one of the set 1a of electronic devices in Figure 1a and the set 1b of the electronic devices in Figure 1b. Method 200 is an example of a detailed implementation of method 100.

Step 201 corresponds to step 101 in method 100 of obtaining measurements by the electronic devices. Step 202 corresponds to step 102 in method 100 of collecting measurements of the electronic devices. As described in step 102 in method 100, one of the electronic devices may be a collector to collect the measurements, or a server may collect the measurements. The rest of steps in method 200 are an example of detailed implementations of step 103 in method 100, wherein a global computation is shown in the example.

In step 203, the position of each electronic device is computed using the positioning measurements and at least one of: the angle measurements of the electronic device and the ranging measurements of the electronic device. The collector or the server which collects the measurements performs step 203 and subsequent steps in method 200.

As described above, a coarse position of the electronic device, which reflects the absolute position of the electronic device but of low accuracy, may be obtained from the positioning measurements. As an example implementation of step 203, the coarse position of each electronic device may be first determined using the positioning measurements. The coarse positions of all the electronic devices are then refined and corrected by the angle measurements and/or the ranging measurements of the electronic devices. For example, the angle measurements and/or the ranging measurements reflect a constraint of relative positions between the electronic devices. The coarse positions of the electronic devices and the constraint of relative positions of the electronic devices are compared to compute finer positions of the electronic devices.

In step 204, the orientation of each electronic device is computed using the angle measurements of the electronic device, the position of the electronic device computed in step 203, and the positions of the neighboring electronic devices computed in step 203. For example, the involved positions are finer positions computed in step 203.

Figure 4 shows an example of computing an orientation of an electronic device in step 204 when the electronic devices are not on a 2-dimensional plane, i.e., they are not co-planar. In the example, the orientation of ANC4 is to be computed, and ANC4 has two neighboring electronic devices ANC5 and ANC6 as shown in Figure 1b. The positions of ANC4, ANC5 and ANC6 are computed in step 203, which are positions in a defined coordinate system. The defined coordinate system is regarded as the system coordinate frame shown in Figure 3. The positions of ANC4, ANC5 and ANC6 in the system coordinate frame provide constraints for computing the orientation of ANC4. The angle measurements of ANC4 relative to ANC5 and ANC6 are compared with the positions of ANC4, ANC5 and ANC6. The orientation of ANC4 is computed using the angle measurements of ANC4 and the positions of ANC4, ANC5 and ANC6. Corresponding computation for detail and corresponding computation for electronic devices on a 2-dimensional plane are known to the skilled person and therefore not described in more detail here.

Referring back to Figure 5, in some implementations, after step 204, the computed positions and the computed orientations of the electronic devices may be provided to a database (not shown in Figure 5).

In some implementations, after step 204, steps 205 and 206 for further refining of the computed positions and the computed orientations may be performed.

In step 205, the position of each electronic device is refined using at least one of: the positioning measurements, the ranging measurements and the orientations computed in step 204. Comparing with step 203, the computed orientations could be additionally used for refining the positions.

In step 206, the orientation of each electronic device is refined using the angle measurements of the electronic device and the positions refined in step 205. Comparing with step 204, the refined positions could be additionally used for refining the orientations.

Steps 205 and 206 are repeated sequentially in an iterative way, such that the positions could be refined by the refined orientations and vice versa, until a target accuracy level of the orientations and the positions is obtained. Afterwards, in some implementations, the positions and the orientations of the electronic devices may be provided to a database (not shown in Figure 5).

Method 200 can be performed continuously (not shown in Figure 5), such that the method starts over with step 201 by obtaining further measurements.

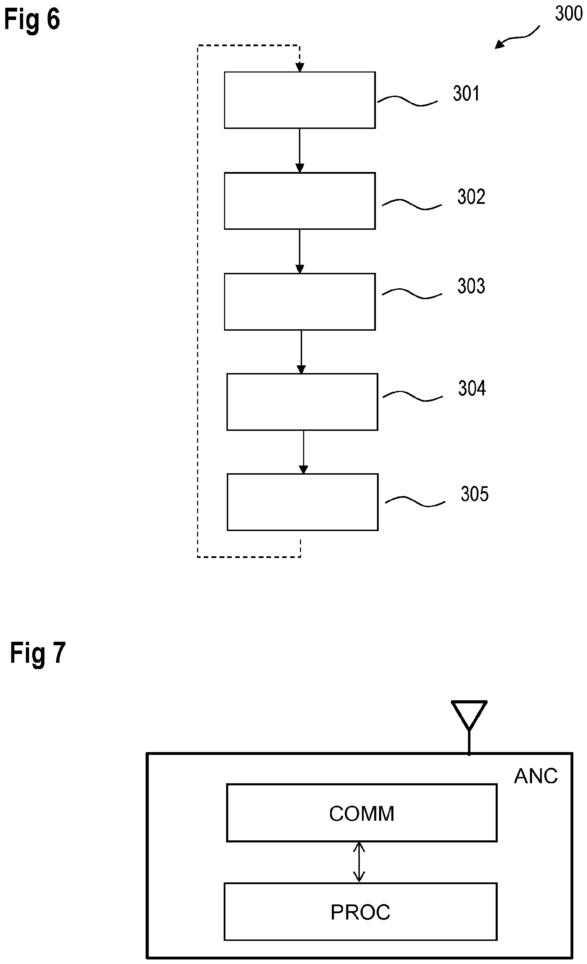

Figure 6 shows a flowchart of a further example implementation of a method 300. Method 300 may be applied for the set 1a of electronic devices in Figure 1a and the set 1b of the electronic devices in Figure 1b. Method 300 is a further example of a detailed implementation of method 100.

Step 301 corresponds to step 101 in method 100 of obtaining measurements of the electronic devices. Step 302 corresponds to step 102 in method 100 of collecting measurements of the electronic devices with the difference that, the measurements are collected only by a server. Afterwards, as an example of detailed implementations of step 103 in method 100, the server performs an optimization, wherein the collected angle measurements, the collected ranging measurements and the collected positioning measurements are inputs of the optimization, and the respective orientations and the respective positions of the electronic devices are outputs of the optimization. In the example, further detailed implementations are described in steps 303 to 305 in method 300, wherein a global computation is shown in the example.

In step 303, the server determines an optimization problem with an objective of minimizing errors of the orientations and the positions. In the optimization problem, equations can be formulated to represent errors (e.g., referred as error functions) between the inputs of the measurements and the outputs of the orientations and the positions. For example, an error function may be defined to represent a difference between a state related to the electronic devices and part of the measurements that influence the state, where the state may be positions or orientations of the electronic device at a time interval. The objective is set to minimize the errors represented by the error functions. For example, the optimization problem may be regarded as minimizing a cost computed by a cost function comprised of the error functions.

In some implementations, the optimization problem and the objective can be formulated differently.

In the following, example implementations in step 303 are described when method 300 is applied for the set 1b of the electronic devices in Figure 1b.

In an example implementation, a cost function may be formulated using the positioning measurements, the angle measurements and/or the ranging measurements; the finer positions are solutions of an optimization problem targeting at minimizing the cost defined by the cost function. For example, a GNSS signal received by one of the electronic devices may be defined by:

$$x_i = x_i(\Phi_i)^{LOS} + x_i(\Phi_i)^{NLOS} + n_i \qquad (1)$$

where $i$ is an index of an electronic device; $\Phi_i$ is a state vector of electronic device $i$; $x_i(\Phi_i)^{LOS}$ represents a LOS signal; $x_i(\Phi_i)^{NLOS}$ represents a non-line-of-sight, NLOS, signal; $n_i$ represents noises. The state vector $\Phi_i$ may include some or all of the following states of electronic device $i$ at an epoch time $t$:

$$\Phi_i^t = \left[p_i^t, v_i^t, q_i^t, \delta_i^t, \dot{\delta}_i^t\right] \qquad (2)$$

where $p_i^t$ is a 3-dimensional position of electronic device $i$ at $t$, $v_i^t$ is a velocity of electronic device $i$ at $t$, $q_i^t$ is an 3-dimensional orientation of electronic device $i$ at $t$, $\delta_i^t$ and $\dot{\delta}_i^t$ are respectively a clock bias and a clock drift of electronic device $i$ at $t$. The state vector $\Phi_i$ may include at least $p_i^t$ and $q_i^t$. Clock related parameters $\delta_i^t$ and $\dot{\delta}_i^t$ may not be required, e.g., when GNSS location fixes are available. The epoch is an interval considered in the system, i.e. the collaborating electronic devices and the server if applicable, wherein the system obtains new measurements and computes positions and orientations in this interval. The epoch time $t$ is a time point representing this epoch. For a sequence of epochs, a set of states of electronic device $i$ can be represented as:

$$\chi_i = \left[\Phi_i^1, \Phi_i^2, ..., \Phi_i^k\right] \qquad (3)$$

where $k$ is an index of epoch times. Equation (1) can be extended with respect to k.

Starting from the positions, the optimization problem for one of the electronic devices may be defined in the following equation:

$$\widehat{p}_i = arg \min_{p_i} f\left(x_i(p_i)\right) \qquad (4)$$

where $f(\cdot)$ is a cost function; $\widehat{p}_i$ represents a finer position of electronic device $i$ which is computed by solving the optimization problem. For a sequence of epochs, equation (4) may be expanded in the following equation:

$$\widehat{p_1} \cdots \widehat{p_k} = arg \min_{p_1 \cdots p_k} g\left(x_1(p_1)...x_k(p_k)\right) \qquad (5)$$

where $g(\cdot)$ is a cost function involving a sequence of epochs.

The cost function may be further defined using the various measurements. As a first example, coarse positions based on GNSS measurements comprised in the positioning measurements are available and used, an error function may be defined in the following equation:

$$\left\|e_i^{GNSS}\right\|_{\sum GNSS}^2 = \left\|p_i^{GNSS} - h(p_i)\right\|_{\sum GNSS}^2 \qquad (6)$$

where $\left\|e_i^{GNSS}\right\|_{\sum GNSS}^2$ represents errors of positions of electronic device $i$ based on GNSS measurements; $p_i^{GNSS}$ is a position of electronic device $i$ based on GNSS measurements; $h(\cdot)$ is a measurement function connecting the states and measurements, e.g. it converts the states to the measurements.

An error function reflecting a constraint of relative positions can be defined in the following equation:

$$\left\|\boldsymbol{e}_{ij}\right\|_{\Sigma ij}^2 = \boldsymbol{d}^{ij} - h^{ij}\left(\boldsymbol{p}_i - \boldsymbol{p}_j\right) = \boldsymbol{d}^{ij} - \left\|\boldsymbol{p}_i - \boldsymbol{p}_j\right\|_{\Sigma ij}^2 \qquad (7)$$

where $\left\|\boldsymbol{e}_{ij}\right\|_{\Sigma ij}^2$ represents errors of relative positions between electronic devices *i* and *j*; *d*$^{ij}$ are ranging measurements between electronic devices *i* and *j*; $\|\boldsymbol{p}_i - \boldsymbol{p}_j\|$ is the Euclidian distance between electronic devices *i* and *j*.

Using equations (6) and (7) for all the collaborating electronic devices, all epoch times and all states, the optimization problem (5) can be rewritten as:

$$\chi^*_{system} = arg \min_{\chi_{system}} \sum_{i=1}^n \sum_{k \in GNSS_i} \left\|e_i^{GNSS}\right\|_{\Sigma GNSS}^2 + \sum_{i,j,k \in d(i,j,k)} \left\|e_k^{ij}\right\|_{\Sigma ij}^2 \qquad (8)$$

where n represents the number of the collaborating electronic devices and *n* ≥ **4**. The solution $\chi^*_{system}$ of the optimization problem is the determined positions, and additional states if included in the state vector, of all the collaborating electronic devices.

The optimization problem is further extended to compute the orientations together with the positions. The angle measurements can be also used for assisting the computation to convergence. The azimuth angle $\phi$ and the elevation angle $\theta$ can be represented using the positions as:

$$\phi^{ij} = \text{atan}\left(\frac{y_j - y_i}{x_j - x_i}\right) \qquad (9)$$

$$\theta^{ij} = \text{atan}\left(\frac{z_j - z_i}{\sqrt{(x_j - x_i)^2 + (y_j - y_i)^2}}\right) \qquad (10)$$

where *x,y,z* correspond to values in three dimensions of a position as shown in Figure 3; *j* is an index of a neighboring electronic device. For example, *j* may be ANC5 or ANC6 when *i* is ANC4 in the example shown in Figure 4.

An error function using the angle measurements and the positions can be defined in the following equations:

$$\left\|\boldsymbol{e}_\phi\right\|_{\Sigma \phi}^2 = \boldsymbol{\phi}^{ij} - h^{ij}\left(\boldsymbol{p}_i, \boldsymbol{q}_i, \boldsymbol{p}_j\right) \qquad (11)$$

$$\left\|\boldsymbol{e}_\theta\right\|_{\Sigma \theta}^2 = \boldsymbol{\theta}^{ij} - h^{ij}\left(\boldsymbol{p}_i, \boldsymbol{q}_i, \boldsymbol{p}_j\right) \qquad (12)$$

where the measurement function $h(\cdot)^{ij}$ can be, for example, defined by rotating the body coordinate frame of electronic device *i* with respect to that of its neighboring electronic device *j* to align with the system coordinate frame, and the rotating can be defined in the following:

$$\boldsymbol{p}_i' = \boldsymbol{q}_i\left(\boldsymbol{p}_i - \boldsymbol{p}_j\right)\boldsymbol{q}_i^{-1} + \boldsymbol{p}_j \qquad (13)$$

Using equations (9), (10) and (13), the error functions defined in equations (11) and (12) can be rewritten as:

$$\left\|\boldsymbol{e}_\phi\right\|_{\Sigma \phi}^2 = \boldsymbol{\phi}^{ij} - \text{atan}\left(\frac{y_j - y_i'}{x_j - x_i'}\right) \qquad (14)$$

$$\|\boldsymbol{e}_\theta\|_{\Sigma\theta}^2 = \theta^{ij} - \mathrm{atan}\left(\frac{z_j - z_i'}{\sqrt{(x_j - x_i')^2 + (y_j - y_i')^2}}\right) \qquad (15)$$

where $x_i', y_i', z_i'$ are coordinates of $\boldsymbol{p}_i'$; $\Sigma\phi$ and $\Sigma\theta$ are covariance matrices calculated based on an empirical rotated signal propagation error model and measured distance and received signal strength indicator, RSSI, values.

The optimization problem defined in equation (8) can be extended to include the error functions (14) and (15), for example:

$$\chi_{system}^* = arg \min_{\chi_{system}} \sum_{i=1}^n \sum_{k \in GNSS_i} \left\|\boldsymbol{e}_i^{GNSS}\right\|_{\Sigma GNSS}^2 + \sum_{i,j,k \in d(i,j,k)} \left\|\boldsymbol{e}_k^{ij}\right\|_{\Sigma ij}^2$$
$$+ \sum_{i,j,k \in AoA(\phi)} \left\|\boldsymbol{e}_\phi\right\|_{\Sigma\phi}^2 + \sum_{i,j,k \in AoA(\theta)} \left\|\boldsymbol{e}_\theta\right\|_{\Sigma\theta}^2 \qquad (16)$$

The solution $\chi_{system}^*$ of the optimization problem contains not only the determined positions but also the determined orientations.

In another example implementation, raw GNSS measurements comprised in the positioning measurements are used instead of coarse positions based on GNSS measurements, and further error functions may be defined. For example, an error function for pseudorange factors may be defined in the following equation:

$$\left\|\boldsymbol{e}_i^\rho\right\|_{\Sigma\rho}^2 = \left\|\rho_s - h(\boldsymbol{p}_i, \boldsymbol{p}_j, \delta_i)\right\|_{\Sigma\delta}^2 \qquad (17)$$

where

$$h(\boldsymbol{p}_i, \boldsymbol{p}_j, \delta_i) = \|\boldsymbol{p}_s - \boldsymbol{p}_i\| + \delta_i$$

and $\rho_s$ represents codephase $\rho$ with respect to satellite s; $\Sigma\rho$ is a covariance matrix calculated based on estimated codephase uncertainty. The uncertainty estimate can be derived using signal to noise ratio and a simplified elevation angle model.

An error function for doppler factors may be further defined in the following:

$$\left\|\boldsymbol{e}_i^{doppler}\right\|_{\Sigma doppler}^2 = \|\lambda d_s - r_s\|_{\Sigma doppler}^2 \qquad (18)$$

where

$$r_s = \boldsymbol{u}_i^s(\boldsymbol{v}_s + \boldsymbol{v}_i) + \frac{\omega_e}{c}\left(v_s^y p_i^x + p_s^y v_i^x - p_s^x v_i^y - v_s^x p_i^y\right)$$

and

$$\boldsymbol{u}_i^s = (\boldsymbol{p}_s - \boldsymbol{p}_i)/\|\boldsymbol{p}_s - \boldsymbol{p}_i\|$$

defines a LOS unit direction vector connecting electronic device *i* and satellite *s*; $\omega_e$ denotes an angular rotation rate of the earth; *c* denotes the speed of light; $\Sigma doppler$ is a covariance matrix that corresponds to doppler measurements, and it is calculated based on estimated doppler measurement uncertainty. The uncertainty estimate can be derived using signal to noise ratio and the simplified elevation angle model.

When additional measurements from additional sensors, e.g. an accelerometer, are available, motion between consecutive epochs can be considered constrained by utilizing stationary detection algorithm based on e.g. accelerometer measurements. A further error function can be defined in the following:

$$\|e_i^z\|_{\Sigma z}^2 = \|h(\boldsymbol{v}_i)\|_{\Sigma z}^2 \tag{19}$$

where

$$h^z(\boldsymbol{v}_i) = -\boldsymbol{v}_i$$

and $\Sigma \boldsymbol{z}$ is a covariance matrix that can be modelled as a constant.

Using equations (7), (17), (18) and (19) for all the collaborating electronic devices, all epoch times and all states, the optimization problem (5) can be rewritten as:

$$\chi_{system}^* = arg \min_{\chi_{system}} \sum_{i=1}^{n} \sum_{k \in \rho_i} \|e_k^\rho\|_{\Sigma_k^\rho}^2 + \sum_{k \in doppler_i} \|e_k^{doppler}\|_{\Sigma_k^{doppler}}^2$$
$$+ \sum_{k \in z_i} \|e_k^z\|_{\Sigma_k^z}^2 + \sum_{i,j,k \in d(i,j,k)} \|e_k^{ij}\|_{\Sigma ij}^2 \tag{20}$$

The solution $\chi_{system}^*$ of the optimization problem is the determined positions, and additional states if included in the state vector, of all the collaborating electronic devices.

The optimization problem is further extended to compute the orientations together with the positions. For example, the optimization problem defined in equation (20) can be extended to include the error functions (14) and (15) as follows:

$$\chi_{system}^* = arg \min_{\chi_{system}} \sum_{i=1}^{n} \sum_{k \in \rho_i} \|e_k^\rho\|_{\Sigma_k^\rho}^2 + \sum_{k \in doppler_i} \|e_k^{doppler}\|_{\Sigma_k^{doppler}}^2$$
$$+ \sum_{k \in z_i} \|e_k^z\|_{\Sigma_k^z}^2 + \sum_{i,j,k \in d(i,j,k)} \|e_k^{ij}\|_{\Sigma ij}^2$$
$$+ \sum_{i,j,k \in AoA(\phi)} \|e_\phi\|_{\Sigma \phi}^2 + \sum_{i,j,k \in AoA(\theta)} \|e_\theta\|_{\Sigma \theta}^2 \tag{21}$$

The solution $\chi_{system}^*$ of the optimization problem is then the determined positions and the determined orientations.

When method 300 is applied for set 1a of the electronic devices in Figure 1a, implementations in step 303 can be apparently derived from the various implementations described above in conjunction with method 300 applied for set 1b of the electronic devices in Figure 1b. For example, dimensions of variables related to positions and orientations can be reduced, and equations are modified correspondently.

In step 304, the inputs are fed in the optimization problem. For example, the inputs are given to variables in the equations.

In step 305, a solution of the optimization problem is found which outputs the orientations and the positions. For example, a solution of the optimization problem contains the orientations and the positions that minimize the errors. To find a solution of the optimization problem, various algorithms may be used, for example, the Levenberg-Marquardt optimization method. Various frameworks for running the optimization can be used, for example, the Ceres solver. Corresponding algorithms are known to the skilled person and therefore not described in more detail here.

Afterwards, in some implementations, the positions and the orientations of the electronic devices may be provided to a database (not shown in Figure 6).

In some implementations, when additional measurements from an accelerometer and/or a magnetometer and/or an inclinometer are available at the server, additional inputs using the additional measurements may be added in the equations to be taken into account in the optimization problem.

Method 300 can be performed continuously, such that the method starts over with step 301 by obtaining further measurements.

Methods 200 and 300 provide different detailed implementations of step 103 in method 100, in particular different implementations of the global computation. The global computation may be carried out according to one of the implementations, or both implementations may be carried out as complement to each other.

Figure 7 shows an example implementation of an electronic device. The electronic device may be one of the electronic devices in Figure 1a and 1b. The electronic device may comprise a communication unit COMM, a processing unit PROC, and an antenna array. The electronic device may be configured to carry out various implementations of methods 100, 200 or 300.

Electronic devices according to various implementations described above and a server may be comprised in a system. The system may comprise at least three electronic devices disposed on a 2-dimensional plane, or at least four electronic devices preferably not on the same 2-dimensional plane (not co-planar) and preferably not co-linear. The server may be a local server machine, a remote server, or a cloud server. The server may be configured to carry out various implementations of methods 100, 200 or 300.

Hence, with the various implementations described above for the improved concept, specific measurements are selected and are used for determining orientations and positions of electronic devices in a collaborative approach by using a global computation. Both the orientations and the positions can be determined accurately and fast.

Various embodiments of the improved concept can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved concept. The logic may form part of a computer program product adapted to direct an information-processing device to automatically perform a set of steps disclosed in embodiments of the improved concept.

The specification and drawings are, accordingly, to be regarded in an illustrative rather than a restrictive sense. However, it will be evident that various modifications and changes may be made thereunto without departing from the scope of the invention as set forth in the claims.

LIST OF REFERENCE SIGNS

100, 200, 300 method
101-103, 201-206, 301-305 steps
ANC, ANC1 to ANC7 electronic device
$\phi$ azimuth angle
$\theta$ elevation angle
$\Psi$ rotation angle
$X_0$, $Y_0$, $Z_0$, $X_B$, $Y_B$, $Z_B$ axis
COMM communication unit
PROC processing unit

**Claims**

1. A method for determining orientations and positions of at least N electronic devices in an area, wherein when the at least N electronic devices are on a 2-dimensional plane, N is 3, else, N is 4, the method comprising:

    - obtaining by each electronic device:

        - angle measurements of the electronic device with respect to M neighboring electronic devices in the at least N electronic devices based on a wireless technology, wherein when N is 3, M is at least 1, and when N is 4, M is at least 2;
        - ranging measurements of the electronic device with respect to at least part of the other electronic devices based on the wireless technology; and
        - positioning measurements of the electronic device;

    - collecting, by one of the at least N electronic devices and/or by a server, the angle measurements, the ranging measurements, and the positioning measurements of each electronic device; and
    - determining, by the one of the at least N electronic devices and/or by the server, the orientation and the position of each electronic device based on the collected angle measurements, the collected ranging measurements and the collected positioning measurements by performing a global computation.

2. The method according to claim 1, wherein, when N is 3 and the at least N electronic devices are all disposed with a same orientation with respect to the 2-dimensional plane, M is 1.

3.  The method according to claim 1 or 2, wherein determining the orientation and the position of each electronic device comprises:

    - computing the position of each electronic device using the positioning measurements and at least one of: the angle measurements of the electronic device and the ranging measurements of the electronic device; and
    - computing the orientation of each electronic device using the angle measurements of the electronic device, the position of the electronic device, and the positions of the M neighboring electronic devices.

4.  The method according to 3, wherein determining the orientation and the position of each electronic device further comprises:

    - refining the position of each electronic device using at least one of: the positioning measurements, the ranging measurements and the orientations;
    - refining the orientation of each electronic device using the angle measurements of the electronic device and the refined positions; and

    repeating the refining of the positions and the refining of the orientations until a target accuracy level of the orientations and the positions is obtained.

5.  The method according to one of claims 1 to 4, wherein determining the orientation and the position of each electronic device further comprises performing an optimization by the server, wherein the collected angle measurements, the collected ranging measurements and the collected positioning measurements are inputs of the optimization, and the respective orientations and the respective positions of the at least N electronic devices are outputs of the optimization.

6.  The method according to claim 5, wherein performing the optimization comprises:

    - determining an optimization problem with an objective of minimizing errors of the orientations and the positions;
    - feeding the inputs in the optimization problem; and
    - outputting the orientations and the positions by finding a solution of the optimization problem.

7.  The method according to one of claims 1 to 6, wherein the positioning measurements of each electronic device comprise at least one of:

    - raw global navigation satellite system, GNSS, measurements of the electronic device; and
    - a preset coarse position of the electronic device.

8.  The method according to one of claims 1 to 7, wherein the ranging measurements of each electronic device are obtained based on timing measurements using the wireless technology.

9.  The method according to one of claims 1 to 8, wherein determining the orientation and the position of each electronic device further comprises:

    - determining an azimuth angle, an elevation angle and a rotation angle of the electronic device, wherein when N is 3 and the at least N electronic devices are all disposed with the same orientation with respect to the 2-dimensional plane, determining one of the azimuth angle, the elevation angle and the rotation angle of the electronic device; and
    - determining a 2-dimensional coordinate in a defined 2-dimensional coordinate system when N is 3, and determining a 3-dimensional coordinate in a defined 3-dimensional coordinate system when N is 4.

10. The method according to one of claims 1 to 9 wherein determining the orientation and the position of each electronic device comprises using at least one of: error distributions, confidence levels and quality indicators with respect to the angle measurements, the ranging measurements, or the positioning measurements.

11. The method according to one of claims 1 to 10 further comprising:

    - collecting additional measurements from an accelerometer and/or a magnetometer and/or an inclinometer in at least one of the at least N electronic devices; and
- using the additional measurements in determining the orientation and the position of each electronic device.

12. The method according to one of claims 1 to 11, wherein collecting the angle measurements, the ranging measurements and the positioning measurements of each electronic device further comprises collecting over a secured channel and authenticating at least the collected ranging measurements.

13. An electronic device configured to perform the method according to one of claims 1 to 12.

14. A server configured to perform the method according to one of claims 1 to 12.

15. A system comprising at least N electronic devices according to claim 13 and at least a server according to claim 14.

**Fig 1a**

**Fig 1b**

| ANC2 |
| ANC1 | | ANC3 |

ANC4 ⟷ ANC5

ANC6 ⟷ ANC7

**Fig 2**

100

101

102

103

**Fig 3**

**Fig 4**

**Fig 5**

**Fig 6**

300

301

302

303

304

305

**Fig 7**

ANC

COMM

PROC

Europäisches
Patentamt

European
Patent Office

Office européen
des brevets

## EUROPEAN SEARCH REPORT

**Application Number**

EP 24 16 1190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/053689 A1 (MCQUEEN TRAVIS J [US] ET AL) 13 February 2020 (2020-02-13) * paragraph [0005] - paragraph [0050] * * paragraph [0081] - paragraph [0101] * * claims 1-19 * * figures 1-20 * * abstract * | 1-15 | INV. G01S5/02 G01S5/12 |
| X | WO 2008/102098 A1 (IMP INNOVATIONS LTD [GB]; LEUNG KIN KWONG [GB] ET AL.) 28 August 2008 (2008-08-28) * page 2 - page 11 * * page 20 - page 23 * * claims 1-70 * * figures 1-13 * * abstract * | 1-3,7-15 | |

TECHNICAL FIELDS
SEARCHED        (IPC)

G01S

The present search report has been drawn up for all claims

| Place of search | Date of completion of the search | Examiner |
|---|---|---|
| Munich | 16 August 2024 | Galmiche, Aurélien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 1190

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2024

| Patent document<br>cited in search report | Publication<br>date | Patent family<br>member(s) | Publication<br>date |
|---|---|---|---|
| US 2020053689 A1 | 13-02-2020 | NONE | |
| WO 2008102098 A1 | 28-08-2008 | NONE | |

EPO FORM P0459

For more details about this annex : see Official Journal of the European Patent Office, No. 12/82